(19) **Europäisches Patentamt**

**European Patent Office**

**Office européen des brevets**

(11) Veröffentlichungsnummer: **0 486 961 B1**

(12) # EUROPÄISCHE PATENTSCHRIFT

(45) Veröffentlichungstag der Patentschrift: **28.06.95**

(51) Int. Cl.[6]: **A23K 1/00**, A23L 1/304

(21) Anmeldenummer: **91119510.5**

(22) Anmeldetag: **15.11.91**

(54) **Verfahren zur Herstellung eines für Menschen und Tiere geeigneten, Spurenelemente enthaltenden Konzentrats.**

(30) Priorität: **20.11.90 DE 4036960**

(43) Veröffentlichungstag der Anmeldung:
**27.05.92 Patentblatt 92/22**

(45) Bekanntmachung des Hinweises auf die Patenterteilung:
**28.06.95 Patentblatt 95/26**

(84) Benannte Vertragsstaaten:
**AT BE CH DE DK ES FR GB GR IT LI LU NL SE**

(56) Entgegenhaltungen:
EP-A- 0 035 062    EP-A- 0 052 152
EP-A- 0 298 179    WO-A-79/00183
WO-A-81/02242    DE-C- 271 881

WORLD PATENTS INDEX LATEST Section Ch, Week 8245, Derwent Publications Ltd.,London, GB; Class C, AN 82-96151E

(73) Patentinhaber: **Firma Hjorth Petersen
Medelbyer Weg 14
D-24983 Handewitt (DE)**

(72) Erfinder: **Schanze, Rudolf
Savignystrasse 9
D-84034Landshut (DE)**

(74) Vertreter: **Kraus, Walter, Dr. et al
Patentanwälte Kraus, Weisert & Partner
Thomas-Wimmer-Ring 15
D-80539 München (DE)**

Rank Xerox (UK) Business Services
(3.10/3.09/3.3.3)

**Beschreibung**

Die Erfindung betrifft ein Verfahren zur Herstellung eines für Menschen und Tiere geeigneten, Spurenelemente enthaltenden Konzentrats, das Konzentrat und seine Verwendung.

In der EP-A-0 052 152 wird ein für Menschen und Tiere geeignetes, Spurenelemente enthaltendes Konzentrat, ein Verfahren zu seiner Herstellung und seine Verwendung beschrieben. Bei dem Verfahren wird zu sauren, flüssigen Nachprodukten der Milchverarbeitung mit einem Gehalt von über 9% Asche in der Trockensubstanz und einem pH-Wert unter 5,5 Pflanzenasche in einer solchen Menge zugegeben, die ausreicht, den pH-Wert zu erhöhen. Das angereicherte flüssige oder pastenförmige Produkt wird getrocknet und gegebenenfalls gemahlen oder granuliert.

Die Erfahrungen bei der Herstellung des bekannten Produktes haben gezeigt, daß die Herstellungseinrichtungen einem unerwartet starken Verschleiß unterliegen. Insbesondere beträgt die Standzeit der Messer an der Trockenwalze nur 3 bis 4 Stunden. Die Standzeit der zur Dosierung üblicherweise verwendeten Zahnradpumpe beträgt nur ca. ein 3/4 Jahr und selbst an der verchromten Trockenwalze treten sichtbare Abnutzungserscheinungen auf, die dazu führen, daß die Trockenwalze in 2 bis 3 Jahren erneuert werden muß. Dies alles bedeutet eine kostenaufwendige Demontage, ein Abschleifen, ein Neuverchromen und eine neue Montage. Es ist von besonderem Nachteil, daß die Messer der Trockenwalze laufend erneuert werden müssen.

Die Akzeptanz bei der Verabreichung des bekannten Produktes ist nicht immer in gewünschtem Umfang gegeben. Insbesondere zeigt sich, daß bei der Verwendung des Produktes als Futterzusatz oder als Futter die Tiere das Produkt oft erst nach mehreren Stunden fressen. Als Ursache für diesen Sachverhalt wurde ein gelegentlich feststellbarer "metallischer Geschmack" bei den Spurenelemente enthaltenden Konzentraten gemäß dem Stand der Technik festgestellt.

Die DE-OS 24 12 601 betrifft die Verwendung von Flugasche als Mittel zur Verbesserung der Qualität und Leistungsfähigkeit von Tieren. Dieses Mittel besitzt den Nachteil, daß es bitter schmeckt und von den Tieren ebenfalls nicht akzeptiert wird.

Die DE-OS 30 24 074 betrifft ein Verfahren zur Herstellung eines mineralstoffreichen Präparats, bei dem ein Mineralsubstrat, beispielsweise Flugasche, mit einem Reagens zur Bildung einer gelösten Form behandelt wird. Als Reagens wird beispielsweise eine organische Säure, wie Ascorbinsäure, Zitronensäure, Weinsäure, Milchsäure, Essigsäure, Propionsäure oder Gluconsäure verwendet. Das bei diesem Verfahren erhaltene Produkt wird ebenfalls von den Tieren wegen seines metallischen Geschmacks nicht vollständig akzeptiert.

Der vorliegenden Erfindung liegt die Aufgabe zugrunde, ein Verfahren zur Herstellung eines Konzentrats zur Verfügung zu stellen, das für Menschen und Tiere geeignet ist, Spurenelemente enthält und bei dem die oben erwähnten Schwierigkeiten nicht auftreten. Insbesondere soll eine Abnutzung der Messer der Trockenwalze vermieden werden und die Standzeit der Messer an der Trockenwalze soll verlängert werden. Weiterhin soll die Standzeit der zur Dosierung üblicherweise verwendeten Zahnradpumpe verlängert werden und die Abnutzungserscheinungen an der verchromten Trockenwalze, die bei den bekannten Verfahren beobachtet werden, sollen vermieden werden. Das bedeutet, daß das Verfahren kostengünstig durchgeführt werden kann, da die Demontage, das Abschleifen, die Neuverchromung und die Montage entfallen.

Erfindungsgemäß soll insbesondere ein Konzentrat, das Spurenelemente enthält, zur Verfügung gestellt werden, das eine gute Akzeptanz aufweist und bei der Verabreichung an Tiere und Menschen keinen "metallischen Geschmack" besitzt. Überraschenderweise wurde gefunden, daß durch die Zugabe von flüssiger Hefe oder Hefeflüssigkeiten die erfindungsgemäße Aufgabe gelöst wird.

Gegenstand der Erfindung ist ein Verfahren zur Herstellung eines für Menschen und Tiere geeigneten, Spurenelemente enthaltenden Konzentrats, wobei man zu flüssigen Nebenprodukten der Lebensmittelindustrie, der Futtermittelindustrie oder der Tierkörperverarbeitungsindustrie, die einen pH-Wert unter 5,5 aufweisen, als Chelatbildner Flugasche oder Pflanzenasche oder ein Gemisch von diesen in einer Menge zusetzt, die ausreicht, den pH-Wert zu erhöhen und das erhaltene flüssige oder pastenförmige Produkt über Walzen oder einen Turm bis zu einer Restfeuchte trocknet und gegebenenfalls in an sich bekannter Weise durch Mahlen oder Granulieren zerkleinert, wobei die Reihenfolge der Stufen beliebig sein kann, das dadurch gekennzeichnet ist, daß zu dem flüssigen Gemisch aus Chelatbildner und Flugasche flüssige Hefe oder Hefeflüssigkeiten oder deren Gemische zugegeben werden.

Die Erfindung betrifft weiterhin ein für Menschen und Tiere geeignetes, Spurenelemente enthaltendes Konzentrat, das

15 bis 45 Gew.-% Feststoffe, die aus der Flugasche oder der Pflanzenasche oder deren Gemischen stammen,

10 bis 25 Gew.-% Trockenmasse, die aus flüssiger Hefe oder Hefeflüssigkeiten stammt, und

30 bis 75 Gew.-% Trockenmasse, die aus sauren, flüssigen Nebenprodukten, Nachprodukten oder Entsorgungsprodukten der Lebensmittelindustrie, der Futtermittelindustrie oder der Tierkörperverarbeitungsindustrie oder deren Gemischen, den Kohlenhydraten oder den Fetten oder deren Gemischen stammt, bezogen auf 100% Trockenmasse, enthält, das dadurch gekennzeichnet ist, daß es durch das Verfahren nach den Ansprüchen 1 bis 8 erhalten wird.

Die Erfindung betrifft außerdem die Verwendung des Konzentrats als Nahrungs- oder Futtermittel oder als Ergänzung zu Nahrungs- oder Futtermitteln.

Überraschenderweise zeigte sich, daß durch die Zugabe von flüssiger Hefe oder Hefeflüssigkeiten zu dem Gemisch aus Flugasche und den sauren, flüssigen Nebenprodukten, Nachprodukten oder Entsorgungsprodukten der Lebensmittelindustrie, der Futtermittelindustrie oder der Tierkörperverarbeitung oder deren Gemischen die folgenden Vorteile erhalten werden:

1. Die Standzeiten der Messer an der Trockenwalze erhöhen sich überraschenderweise auf 24 bis 48 Stunden.

2. Der Verschleiß an der Zahnradpumpe wird erheblich vermindert.

3. An der Chromschicht der Trockenwalze ist kein mechanischer Abtrag mehr zu erkennen.

Überraschenderweise zeigte sich weiterhin, daß das bei dem Verfahren erhaltene Produkt eine bessere Akzeptanz bei Tieren und Menschen findet. Der "metallische Geschmack" wird bei dem erfindungsgemäßen Produkt nicht beobachtet.

Eine Erklärung für die überraschende Wirkung der Hefe wird im folgenden gegeben, obgleich dies keine Beschränkung sein soll.

Der wesentliche Inhaltsstoff des Konzentrats besteht in der Flugasche. Diese wirkt auf die mechanisch bewegten Teile oder mechanisch beanspruchten Teile bei der Herstellung wie ein Schleifmittel. So lassen sich die eingangs aufgezeigten begrenzten Standzeiten der apparativen Einrichtungen verstehen. Das bekannte Verfahren zur Herstellung des Konzentrats bietet für dieses Problem keine Lösung. Die Konsistenz der bekannten Konzentrate ist vor der Walzentrocknung derart, daß eine Sedimentation auftreten kann, da die Asche dazu neigt, einen Bodensatz zu bilden. Dies bedeutet, daß die Asche auch in dem Produkt unterschiedlich verteilt sein kann. Im Unterschied hierzu ergibt sich bei dem erfindungsgemäßen Verfahren eine Konsistenz, die sich durch eine stabile Homogenität und ein konstantes Trocknungsverhalten auszeichnet. Das erfindungsgemäße Produkt ist einheitlich, und eine Sedimentation oder Bodensatzbildung der Asche wird nicht beobachtet. Durch die neuartige Möglichkeit, die apparativen Einrichtungen mit dem erfindungsgemäßen Herstellungsverfahren zu schonen und den Verschleiß zu vermindern, ergibt sich auf mittlere Sicht, daß sich die Herstellungskosten des Produktes wesentlich vermindern.

Darüberhinaus ist überraschenderweise gefunden worden, daß sich das Herstellungsverfahren einfach und komplikationsfrei durchführen läßt.

Die Beobachtung, daß das erfindungsgemäße Produkt von Menschen und Tieren besser akzeptiert wird, kann damit erklärt werden, daß der Hefeanteil den Geschmack des Produktes in Appetit anregender Weise beeinflußt, wobei die Hefe bei dem Anteil in der Trockenmasse des Endprodukts geschmacklich nicht dominiert. Die Verwendung von Hefe hat den weiteren Vorteil, daß durch die Hefe Vitamine eingeführt werden. Es ist weiterhin bekannt, daß Hefe die körpereigenen Transportmechanismen begünstigt und fördert. Mit dem erfindungsgemässen Produkt wird somit auch ermöglicht, die bekannte verdauungsfördernde Wirkung von Hefe auszunutzen.

Erfindungsgemäß werden saure, flüssige Nebenprodukte, Nachprodukte oder Entsorgungsprodukte der Lebensmittelindustrie, der Futtermittelindustrie oder der Tierkörperverarbeitungsindustrie oder deren Gemische verwendet. Hinsichtlich der Produkte gibt es praktisch keine Beschränkungen.

Beispiele für solche Produkte, die erfindungsgemäß verwendet werden können, sind

Produkte aus dem Gärungsgewerbe, d.h. der Fermentationstechnik, die in Brauereien, Brennereien, Keltereien anfallen, wie Wein, Obstwein, Sprit und technische Gärprodukte. Beispiele hierfür sind Obstsirupe (mit einer Trockenmasse von mindestens 10 Gew.-%), Vinassen (mit einer Trockenmasse von mindestens 15 Gew.-%), Treber, Schlempen, Hopfentreber bzw. Truben und Mycelien (je mit einem Trockengehalt bis zu maximal 10 Gew.-%), Malzkeime (mit einem Trockengehalt von maximal 1 Gew.-%).

Produkte aus der Obstverarbeitung, wie beispielsweise der Saftgewinnung bei Kern-, Stein- und Traubenobst, wie beispielsweise Obstsirupe und Schlempen (mit einer Trockenmasse von mindestens 15 Gew.-%) und Trester (mit einer maximalen Trockenmasse von 10 Gew.-%).

Produkte aus der Milchverarbeitung, die bei der Trennung der Milchanteile, der Herstellung von Milchsäure usw. anfallen, wie Buttermilchen, Molken, Retentate (mit einer Trockenmasse von mindestens 15 Gew.-%), flüssiger Käsestaub, Zentrifugate (Trockenmasse mindestens 10 Gew.-%), Salzwasser (Trockenmasse maximal 10 Gew.-%), Permeate (Trockenmasse maximal 45 Gew.-%) und Schmelzablauf-

(Trockenmasse maximal 15 Gew.-%), (vgl. auch EP-A-0 052 152).

Produkte aus der Tierkörperverarbeitung, wie flüssige Rückstände aus der Schlachterei, der Fleisch- und Fischverarbeitung, wie Seren (Trockenmasse aus der Schlachterei und Fleischverarbeitung mindestens 10 Gew.-%, aus der Fischverarbeitung höchstens 10 Gew.-%), Solubles und flüssiges Blut aus der Schlachterei und Fleischverarbeitung (Trockenmasse mindestens 10 Gew.-%), Soulubles und Preßwässer aus der Fischverarbeitung (Trockenmasse höchstens 10 Gew.-%), Schmelzablauf von der Fischverarbeitung (Trockenmasse höchstens 15 Gew.-%).

Produkte aus der Stärkefabrikation, der Zuckerfabrikation, die bei der Verarbeitungsaufarbeitung von Getreide, Kartoffeln, Reis, Tapioka, Dari usw. anfallen, wie Quellwasser (Trockenmasse mindestens 10 Gew.-%), Melassen und Bagassen (Trockenmasse jeweils höchstens 20 Gew.-%).

Produkte der Getreideverarbeitung, die in der Müllerei, Schälmüllerei und bei der Verarbeitung von Vollgetreide anfallen, wie Schrot (Trockenmasse mindestens 10 Gew.-%), Kleien, Spelzen und Hülsen (Trockenmasse höchstens 15 Gew.-%).

Produkte der Kartoffelverarbeitung, Hülsenfrüchte, Erbsen, Bohnen, Wicken, Lupinen, Soja, insbesondere in Form der Mehle (mit einer Trockenmasse von mindestens 10 Gew.-%) und Produkte der Gemüseverarbeitung und Futtermittelverarbeitung.

Hinsichtlich diesen sauren, flüssigen Nebenprodukten, Nachprodukten oder Entsorgungsprodukten der Lebensmittelindustrie, der Futtermittelindustrie oder der Tierkörperverarbeitung oder deren Gemische gibt es praktisch keine Beschränkungen. Als Flugasche oder Pflanzenasche können alle die bekannten Aschen verwendet werden und im Zusammenhang hiermit wird expressis verbis auf den oben bereits zitierten Stand der Technik, insbesondere auf die EP-A-0 052 152 verwiesen.

Zu diesem Gemisch aus Asche und dem Chelatbildner wird flüssige Hefe oder eine Hefeflüssigkeit zugefügt. Die flüssige Hefe hat einen sauren pH-Wert, der im allgemeinen im Bereich bei 4,5 liegt. Die flüssige Hefe sollte eine Trockenmasse von mindestens 9 Gew.-% aufweisen und sie stammt aus Brauereien und Fermentationsbetrieben. In Brauereien und anderen Fermentations- bzw. Gärungsbetrieben fallen laufend Suspensionen von Hefe und Hefeflüssigkeiten an. Es ist erfindungsgemäß bevorzugt, untergärige Hefe zu verwenden. Die Hefeflüssigkeiten oder die flüssige Hefe enthalten lebende Hefezellen, es ist jedoch auch möglich, daß tote Hefezellen in dem Gemisch enthalten sind. Erfindungsgemäß kann man beliebige Hefen und Hefeflüssigkeiten einsetzen. Wie bereits oben ausgeführt, begünstigt die Hefe die Filmbildung und verhindert eine Sedimentation der Flugasche und ermöglicht somit eine bessere Durchmischung des Produktes.

Die 3 wesentlichen Bestandteile des erfindungsgemäßen Produktes können in beliebiger Reihenfolge miteinander vermischt werden. Es ist jedoch bevorzugt, die Flugasche zu dem Chelatbildner zuzugeben und dann die flüssige Hefe oder die Hefeflüssigkeit zu dem Gemisch aus Flugasche und Chelatbildner zuzufügen. Der Chelatbildner muß einen pH-Wert unter 5,5, vorzugsweise unter 4,5 aufweisen. Es ist daher bevorzugt, daß der Chelatbildner einen pH-Wert im Bereich von 4,9 bis 3,9 besitzt. Gegebenenfalls kann man zu dem Chelatbildner noch eine genießbare und physiologisch annehmbare Säure, wie beispielsweise Phosphorsäure, Zitronensäure, Weinsäure, Milchsäure, Essigsäure, Propionsäure oder Gluconsäure zugeben. Im allgemeinen ist jedoch eine Säurezugabe mit Ausnahme von Phosphorsäure nicht erforderlich. Zu dem Chelatbildner werden Flugasche oder Pflanzenasche in solcher Menge zugegeben, daß sich der pH-Wert auf einen Wert von über 6, vorzugsweise über 7, erhöht. Zu dem Gemisch wird dann flüssige Hefe bzw. eine Hefeflüssigkeit zugegeben. Das Endprodukt soll einen pH-Wert besitzen, der bei 6, vorzugsweise über 7, liegt. Man kann auch gegebenenfalls nach der Zugabe von flüssiger Hefe oder Hefeflüssigkeit noch Flugasche oder Pflanzenasche zu dem Gemisch hinzugeben, dies ist im allgemeinen jedoch nicht erforderlich, da das Gemisch aus Chelatbildner und Flugasche oder Pflanzenasche als Puffer wirkt. Das Vermischen der Bestandteile kann im allgemeinen bei Raumtemperatur oder bei Temperaturen im Bereich bis 65°C (für den Chelatbildner und die Flug- oder Pflanzenasche) oder bei Temperaturen bis 45°C bei der Beimischung von Hefe erfolgen. Nach der Zugabe der Hefe bzw. Hefeflüssigkeit sollte die Temperatur nicht über 45°C erhöht werden.

Dem Gemisch aus den 3 Bestandteilen kann gegebenenfalls zusätzlich Kohlenhydrate oder Fette oder deren Gemische beigemischt werden. Diese Beimischung von Kohlenhydraten oder Fetten oder deren Gemische kann zu einem beliebigen Zeitpunkt erfolgen. Als Kohlenhydrate werden bevorzugt Kartoffelprodukte, wie Kartoffelstärke, Kartoffelmehl, Kartoffelflocken, Kartoffelschälabfälle oder ganze Kartoffeln, Getreidemehl und Getreidenachprodukte, wie von Reis, Mais, Gerste, Weizen, Hafer, Roggen, Hirse, Brotabfälle, beispielsweise Knäckebrotbruch zugegeben. Grundsätzlich kann man zu dem Produkt alle die Zusatzprodukte, die bereits in der EP-A-0 052 152 erwähnt werden, wie beispielsweise Spurenelemente, Vitamine, Mineralstoffe oder übliche Zusatzstoffe zufügen. Ferner kann man die Fette zugeben, die an sich für Futtermittel und Nahrungsmittel bekannt sind, es sind jedoch Triglyceride von gesättigten Fettsäuren zu verwenden, da dadurch die Metallgleitfähigkeit verbessert wird.

Das bei dem Verfahren erhaltene Produkt ist flüssig oder pastenförmig, und es wird über Walzen oder einen Turm bis zu einer Restfeuchte von maximal 12% (diese wird durch das Futtermittelgesetz vorgeschrieben), vorzugsweise jedoch bis zu einer Restfeuchte von maximal 7%, besonders bevorzugt im Bereich von 5 bis 6% getrocknet.

Die Bestandteile werden so vermischt, daß das Endprodukt, bezogen auf die Trockenmasse, enthält:

15 bis 45 Gew.-%, vorzugsweise 25 bis 35 Gew.-% und besonders bevorzugt 30 Gew.-% Feststoffe, die aus Flugasche oder der Pflanzenasche oder deren Gemischen stammen.

10 bis 25 Gew.-%, vorzugsweise 12 bis 20 Gew.-%, am meisten bevorzugt 15 Gew.-% Trockenmasse, die aus der flüssigen Hefe oder der Hefeflüssigkeit stammt und

30 bis 75 Gew.-%, vorzugsweise 40 bis 60 Gew.-%, besonders bevorzugt 45 Gew.-% Trockenmasse, die aus den sauren, flüssigen Nebenprodukten, Nachprodukten oder Entsorgungsprodukten der Lebensmittelindustrie, der Futtermittelindustrie oder der Tierkörperverarbeitung oder aus Kohlenhydraten oder Fetten oder deren Gemischen stammen.

Diesem Produkt (bezogen auf 100% Trockenmasse) können jeweils die Zusatzstoffe oder Additive gemäß dem Stand der Technik in den Mengen, wie sie üblicherweise auf diesem Gebiet verwendet werden, zugesetzt werden.

Bevorzugte erfindungsgemäße Produkte enthalten beispielsweise, bezogen auf die Trockenmasse im Naßgut (d.h. das Produkt enthält noch Restfeuchte):

| Komponente | % |
|---|---|
| Pflanzenasche Steinkohlenflugasche | 33 |
| Getreide (Weizen) Mehl | 27 |
| Molken milchsauer, entzuckert | 25* |
| Bierhefen (frisch) | 15* |

* naturbedingte Schwankungen möglich

Inhaltsstoffe, berechnet aus den Einzelwerten/Komponenten:

| Parameter | % iT | % Produkt |
|---|---|---|
| Restfeuchte | | 6. |
| Roh-Protein | 14.8 | 14. |
| Roh-Faser | 1.7 | 2.(max.) |
| Roh-Asche | 37.8 | 35. |
| Roh-Fett | 1.3 | 1-2 |
| ---------- | | |
| | | |
| AS  Lysin | 0.94 | 0.8 |
| Methionin + Cystin | 0.485 | 0.4 |
| Tryptophan | 0.187 | 0.15 |
| ---------- | | |
| | | |
| MIN  Calcium Ca | 1.60 | 1.5 |
| Phosphor P | 1.03 | 0.9 |
| Natrium Na | 0.55 | 0.5 |
| Magnesium Mg | 0.41 | 0.35 |
| Silizium Si | 6.45 | 6. |
| Aluminium Al | 3.95 | 3.5 |
| | | |
| | | |
| Titan Ti | 0.15 | 0.1 |
| ---------- | ==================== | |
| SPEL Eisen  Fe | 5000 ca-Werte | |
| Zink  Zn | 60 | |
| Kupfer  Cu | 60 | |
| Mangan  Mn | 120 | |
| ---------- | | |
| | | |
| Schwefel S | 480 | |

Weitere unüblich gehandhabte Spurenelemente aus der Pflanzenasche:

| Lithium | Li | 12 | ppm = mg/kg |
|---------|-----|------|-------------|
| Bor | B | 65 | |
| Fluor | F | 35 | |
| Vandadium | V | 15 | |
| Chrom | Cr | 30 | |
| Nickel | Ni | 15 | |
| Arsen | As | 7 | |
| Selen | Se | 0.1 | |
| Molybdän | Mo | 10 | |
| Zinn | Sn | 15 | |
| Jod | J | 0.1 | |
| Wismut | Bi | 0.2 | |

– – – – – – – – – – – – – – – –

Die Toxizität des erfindungsgemäßen Produktes ist praktisch nicht gegeben und läßt Überdosierungen ohne Risiken zu. Im Tierversuch erweisen sich die Produkte als erfolgreich und geeignet, bisher mögliche Mangelerscheinungen, insbesondere bei Fruchtbarkeitsstörungen, Avitalität von Jungtieren, unsymptomatischen Durchfällen und allgemeinen, nicht definierbaren Depressionen in Wachstum und Verwertung hochleistender Tiere auszuschalten.

In der menschlichen Ernährung bieten sich die Produkte dort an, wo zu stark vereinseitigte Ernährung und Überernährung zu Zivilisationskrankheiten führen, die sich auf unaufklärbare Mangelsituationen zurückführen lassen und daher einer Vervollständigung der Kost durch Spurenstoffe und Resorptionsförderfaktoren bedürfen.

Die folgenden Beispiele erläutern die Erfindung.

**Beispiel 1**

Folgende Materialien werden vermischt:

| Dick-Hefe | 4600 kg |
|-----------|---------|
| Molekonzentrat | 6000 kg |
| Weizenmehl | 3100 kg |
| Flugasche | 3000 kg |
| Gesamt: | 16.700 kg |

Das Produkt wird getrocknet, man erhält 8000 kg Trockengut.

**Beispiel 2**

Man arbeitet wie in Beispiel 1 beschrieben und vermischt

| Dickhefe | 6000 kg |
|----------|---------|
| Molkekonzentrat | 8400 kg |
| Weizenmehl | 3600 kg |
| Flugasche | 3050 kg |
| Ackerbohnen (zerkleinert) | 350 kg |
| Gesamt: | 21.400 kg |

Das erhaltene Produkt wird getrocknet, man erhält 10.500 kg Trockenprodukt.

**Beispiel 3**

| Dickhefe | 55 l |
|---|---|
| Ackerbohnen | 3 kg |
| Mehl | 35 kg |
| Asche | 30 kg |
| Molke | 70 l |

werden vermischt und anschließend getrocknet.

| Allgemeine Rezeptur | | |
|---|---|---|
| Gemengteile | Masse/kg | Trockenmasse/kg |
| Frischhefe aus Brauerei 11% Trockenmasse<br>darin aufgelöst extrudierte gemahlene Leguminosen,<br>z.B. Sojabohnen, Ackerbohnen 88% Trockenmasse<br>darin wird aufgelöst Molkenpulver 97%<br>Trockenmasse (bereits getrocknete Molke) | 125<br><br><br>410 | 110 |
| anstelle des getrockneten Molkepulvers kann man selbstverständlich auch flüssige Molke verwenden | | |
| Zugabe Pflanzenasche 100% Trockenmasse | 500 | |

**Patentansprüche**

1. Verfahren zur Herstellung eines für Menschen und Tiere geeigneten, Spurenelemente enthaltenden Konzentrats, wobei man zu flüssigen Nebenprodukten der Lebensmittelindustrie, der Futtermittelindustrie oder der Tierkörperverarbeitungsindustrie, die einen pH-Wert unter 5,5 aufweisen, als Chelatbildner Flugasche oder Pflanzenasche oder ein Gemisch von diesen in einer Menge zusetzt, die ausreicht, den pH-Wert zu erhöhen und das erhaltene flüssige oder pastenförmige Produkt über Walzen oder einen Turm bis zu einer Restfeuchte trocknet und gegebenenfalls in an sich bekannter Weise durch Mahlen oder Granulieren zerkleinert, wobei die Reihenfolge der Stufen beliebig sein kann, dadurch **gekennzeichnet,** daß zu dem flüssigen Gemisch aus Chelatbildner und Flugasche flüssige Hefe oder Hefeflüssigkeiten oder deren Gemische zugegeben werden.

2. Verfahren nach Anspruch 1, dadurch **gekennzeichnet,** daß als Chelatbildner flüssige Nebenprodukte, Nachprodukte oder Entsorgungsprodukte aus dem Gärungsgewerbe, aus Keltereien, der Obstverarbeitung, der Milchverarbeitung, der Tierkörperverarbeitung, der Stärkefabrikation, der Zuckerfabrikation, der Getreideverarbeitung, der Kartoffelverarbeitung, der Hülsenfrüchteverarbeitung oder der Gemüseverarbeitung oder deren Gemische verwendet werden.

3. Verfahren nach Anspruch 1 oder 2, dadurch **gekennzeichnet,** daß die Asche in einer solchen Menge zugesetzt wird, die ausreicht, den pH-Wert auf einen Wert über 7 zu erhöhen.

4. Verfahren nach einem der Ansprüche 1, 2 oder 3, dadurch **gekennzeichnet,** daß das Produkt bis zu einer maximalen Restfeuchte von 4% getrocknet wird.

5. Verfahren nach einem der Ansprüche 1 bis 4, dadurch **gekennzeichnet,** daß dem Gemisch zusätzlich bei einer beliebigen Stufe
   (i) Kohlenhydrate oder
   (ii) Fette oder
   (iii) deren Gemische
   zugesetzt werden.

**6.** Verfahren nach mindestens einem der Ansprüche 2 bis 5, dadurch **gekennzeichnet,** daß als Kohlenhydrate Kartoffelprodukte, Getreideprodukte oder deren Gemische zugegeben werden.

**7.** Verfahren nach mindestens einem der Ansprüche 2 bis 6, dadurch **gekennzeichnet,** daß als Fette Triglyceride von gesättigten Fettsäuren zugegeben werden.

**8.** Verfahren nach mindestens einem der Ansprüche 1 bis 7, dadurch **gekennzeichnet,** daß die Bestandteile in solchen Mengen eingesetzt werden, daß das Endprodukt
15 bis 45 Gew.-% Feststoffe, die aus der Flugasche oder der Pflanzenasche oder deren Gemischen stammen,
10 bis 25 Gew.-% Trockenmasse, die aus flüssiger Hefe oder Hefeflüssigkeiten stammt, und
30 bis 75 Gew.-% Trockenmasse, die aus sauren, flüssigen Nebenprodukten, Nachprodukten oder Entsorgungsprodukten der Lebensmittelindustrie, der Futtermittelindustrie oder der Tierkörperverarbeitungsindustrie oder deren Gemischen, den Kohlenhydraten oder den Fetten oder deren Gemischen stammt,
bezogen auf 100 Gew.-% Trockenmasse, enthält.

**9.** Für Menschen und Tiere geeignetes, Spurenelemente enthaltendes Konzentrat, das
15 bis 45 Gew.-% Feststoffe, die aus der Flugasche oder der Pflanzenasche oder deren Gemischen stammen,
10 bis 25 Gew.-% Trockenmasse, die aus flüssiger Hefe oder Hefeflüssigkeiten stammt, und
30 bis 75 Gew.-% Trockenmasse, die aus sauren, flüssigen Nebenprodukten, Nachprodukten oder Entsorgungsprodukten der Lebensmittelindustrie, der Futtermittelindustrie oder der Tierkörperverarbeitungsindustrie oder deren Gemischen, den Kohlenhydraten oder den Fetten oder deren Gemischen stammt, bezogen auf 100% Trockenmasse, enthält, dadurch **gekennzeichnet,** daß es durch das Verfahren nach den Ansprüchen 1 bis 8 erhalten wird.

**10.** Verwendung des Konzentrats nach Anspruch 9 als Nahrungs- oder Futtermittel oder als Ergänzung zu Nahrungs- oder Futtermitteln.

**Claims**

**1.** Process for the production of a concentrate, containing trace elements, suitable for humans and animals, wherein fly ash or vegetable ash or a mixture of these is added as a chelating agent to liquid by-products from the food industry, the animal feedstuffs industry or the animal carcase processing industry, which by-products have a pH of below 5.5, in a quantity sufficient to raise the pH, and the resultant liquid or pasty product is dried on rollers or in a tower to a residual moisture content and is optionally comminuted in a known manner by grinding or granulation, wherein the order of the stages may be selected at will, characterised in that liquid yeast or yeast liquids or mixtures thereof are added to the liquid mixture of chelating agent and fly ash.

**2.** Process according to claim 1, characterised in that the chelating agents used are liquid by-products, after-products or waste products from the fermentation industry, from fruit pressing plants, fruit processing, milk processing, animal carcase processing, starch production, sugar production, grain processing, potato processing, pulse processing or vegetable processing or mixtures thereof.

**3.** Process according to claim 1 or 2, characterised in that the ash is added in a sufficient quantity to raise the pH value to a value above 7.

**4.** Process according to one of claims 1, 2 or 3, characterised in that the product is dried to a maximum residual moisture content of 4%.

**5.** Process according to one of claims 1 to 4, characterised in that
(i) carbohydrates or
(ii) fats or
(iii) mixtures thereof
are added to the mixture at any desired stage.

6. Process according to at least one of claims 2 to 5, characterised in that potato products, grain products or mixtures thereof are used as carbohydrates.

7. Process according to at least one of claims 2 to 6, characterised in that triglycerides of saturated fatty acids are used as fats.

8. Process according to at least one of claims 1 to 7, characterised in that the constituents are used in quantities such that the finished product contains
15 to 45 wt.% of solids originating from the fly ash or vegetable ash or mixtures thereof,
10 to 25 wt.% of dry weight originating from liquid yeast or yeast liquids, and
30 to 75 wt.% of dry weight originating from acidic, liquid by-products, after-products or waste products from the food industry, the animal feedstuffs industry or the animal carcase processing industry or mixtures thereof, from the carbohydrates or fats or mixtures thereof,
related to 100 wt.% of dry weight.

9. Concentrate, containing trace elements, suitable for humans and animals which contains
15 to 45 wt.% of solids originating from the fly ash or vegetable ash or mixtures thereof,
10 to 25 wt.% of dry weight originating from liquid yeast or yeast liquids, and
30 to 75 wt.% of dry weight originating from acidic, liquid by-products, after-products or waste products from the food industry, the animal feedstuffs industry or the animal carcase processing industry or mixtures thereof, from the carbohydrates or fats or mixtures thereof, related to 100 wt.% of dry weight, characterised in that it is obtained using the process according to claims 1 to 8.

10. Use of the concentrate according to claim 9 as a foodstuff or feedstuff or as a supplement to foodstuffs or feedstuffs.

**Revendications**

1. Procédé de préparation d'un concentré contenant des oligo-éléments, approprié à l'homme et aux animaux, dans lequel on ajoute, à des produits secondaires liquides provenant de l'industrie alimentaire, de l'industrie des aliments pour animaux ou de l'industrie de transformation de la viande animale, qui ont un pH inférieur à 5,5, comme agents de chélation, des cendres volantes ou des cendres végétales, ou un mélange de celles-ci, en une quantité suffisante pour augmenter le pH, on sèche le produit obtenu, liquide ou pâteux, sur des cylindres ou dans une colonne, jusqu'à l'obtention d'une humidité résiduaire, et éventuellement, on le réduit d'une manière connue en soi par broyage ou granulation, ces opérations pouvant être effectuées dans un ordre quelconque, caractérisé en ce qu'on ajoute une levure liquide ou des liquides contenant des levures, ou des mélanges de ceux-ci, au mélange liquide d'agents de chélation et de cendres volantes.

2. Procédé selon la revendication 1, caractérisé en ce qu'on utilise, comme agents de chélation, des produits secondaires, des produits de transformation ou des produits d'élimination de déchets, à l'état liquide, provenant des opérations de fermentation, des pressoirs, de la transformation des fruits, de la fabrication de l'amidon, de la fabrication du sucre, de la transformation des céréales, de la transformation des pommes de terre, de la transformation des légumineuses ou de la transformation des légumes, ou des mélanges de ceux-ci.

3. Procédé selon la revendication 1 ou 2, caractérisé en ce qu'on ajoute les cendres en une quantité suffisante pour augmenter le pH à une valeur supérieure à 7.

4. Procédé selon l'une des revendications 1, 2 ou 3, caractérisé en ce qu'on sèche le produit jusqu'à l'obtention d'une humidité résiduelle maximale de 4 %.

5. Procédé selon l'une des revendications 1 à 4, caractérisé en ce qu'on ajoute, en outre :
(i) des glucides,
(ii) des graisses ou
(iii) des mélanges de ceux-ci,
au mélange, pendant n'importe quelle étape du procédé.

6. Procédé selon au moins l'une des revendications 2 à 5, caractérisé en ce qu'on ajoute, comme glucides, des produits dérivés de la pomme de terre, des produits dérivés des céréales ou des mélanges de ceux-ci.

7. Procédé selon au moins l'une des revendications 2 à 6, caractérisé en ce qu'on ajoute, comme graisses, des triglycérides d'acides gras saturés.

8. Procédé selon au moins l'une des revendications 1 à 7, caractérisé en ce qu'on utilise les constituants en des quantités telles que le produit final contient :
   15 à 45 % en poids de matières solides provenant des cendres volantes ou des cendres végétales ou des mélanges de celles-ci,
   10 à 25 % en poids de substance sèche provenant de la levure liquide ou des liquides contenant des levures, et
   30 à 75 % en poids de substance sèche provenant de produits secondaires, de produits transformés ou de produits d'élimination de déchets, à l'état liquide, provenant de l'industrie alimentaire, de l'industrie des aliments pour animaux ou de l'industrie de transformation de la viande animale, ou des mélanges de ceux-ci, des glucides ou des graisses ou de leurs mélanges, pour 100 % en poids de substance sèche.

9. Concentré contenant des oligo-éléments, approprié à l'homme et aux animaux, contenant :
   15 à 45 % en poids de matières solides provenant des cendres volantes ou des cendres végétales ou des mélanges de celles-ci,
   10 à 25 % en poids de substance sèche provenant de la levure liquide ou des liquides contenant des levures, et
   30 à 75 % en poids de substance sèche provenant de produits secondaires, de produits transformés ou de produits d'élimination de déchets, à l'état liquide, provenant de l'industrie alimentaire, de l'industrie des aliments pour animaux ou de l'industrie de transformation de la viande animale, ou des mélanges de ceux-ci, des glucides ou des graisses ou de leurs mélanges, pour 100 % en poids de substance sèche, caractérisé en ce qu'on l'obtient au moyen du procédé selon les revendications 1 à 8.

10. Utilisation du concentré selon la revendication 9 comme un aliment ou un fourrage ou comme un complément à des aliments ou des fourrages.